# EUROPEAN PATENT APPLICATION

(11) **EP 1 353 132 A2**
(43) Date of publication of application: **15.10.2003**
(21) Application number: 03005684.0
(22) Date of filing: 13.03.2003
(51) Int. Cl.: F25B 1/00, F25B 41/04, F25B 49/02, A23G 9/16

(54) **Method and apparatus for the control of the flow rate of the refrigerating fluid in ice cream making machines**

(30) Priority: 10.04.2002 IT GE20020028
(71) Applicant: ALI S.p.A. - CARPIGIANI GROUP, 40011 Anzola Emilia (Bologna) (IT)
(72) Inventor: Cocchi, Gino, 40137 Bologna (IT); Zaniboni, Gianni, 40044 Borgonuovo di Sasso Marconi (IT)
(74) Representative: Porsia, Attilio, Dr.

(57) **Abstract**

Method for the control of the flow rate of refrigerating fluid in ice cream making machines comprising a vapour-compression refrigerating circuit (P) provided as a minimum with a compressor (9), a condenser (8), an evaporator (1) and a main valve (3) for injecting refrigerating fluid into the said evaporator (1), the method comprising the following steps:
- measuring the temperature-pressure values of the fluid at the outlet of the evaporator (1);
- tapping off, on the basis of the measurement taken in the first step, a flow of hot gas at the outlet of the compressor (9); and
- sending this tapped-off flow of gas to a point downstream of the main refrigerating fluid injection valve (3). This method is carried out by means of an apparatus comprising at least one tapping-off line (D) that takes a flow of gas from the outlet of this compressor (9) and sends it to a zone of this circuit (P) situated between the main valve (3) and the evaporator (1), means (12, 13, 14) are provided on this line (D) to control and monitor this tapped-off flow of gas.

## Description

The present invention relates to a method for the control of the flow rate of the refrigerating fluid in ice cream making machines and an apparatus for carrying out this method.

As is known, ice cream making machines basically comprise a freezing cylinder equipped with rotating blades connected to a system for monitoring the ice cream hardness, and a vapour-compression refrigerating circuit carrying a refrigerating gas supplied automatically to this cylinder through a thermostatic expansion valve.

Considerable irregularities occur with these machines towards the end of the freezing operation, when the product is at a temperature close to the desired final temperature. These irregularities are a consequence of the fact that the thermal power at the evaporator, that is the freezing cylinder, decreases progressively during the freezing process as the fraction of frozen water present in the mixture contained inside the cylinder rises. This decrease in the thermal power at the evaporator triggers a progressive reduction in the rate of flow of refrigerating gas and a consequent reduction in the evaporation pressure and in the corresponding saturated evaporation temperature. This temperature drop in the evaporator causes a significant hardening of that part of the mixture which is immediately in contact with the inner walls of the cylinder, which makes a large amount of power necessary to scrape the product off these walls.

This power is interpreted by the ice cream hardness monitoring system as indicating that the target hardness value has been reached. This causes the refrigerating compressor to stop, even though in reality the general mass of the ice cream is not yet at the optimal hardness.

The operation of the thermostatic valve depends on the temperature relative to the pressure in the evaporator and on the actual temperature at its outlet, and therefore when the compressor is stopped, the two temperatures undergo large variations and this causes irregular behaviour of the said valve, which tends to open and close several times in rapid succession, releasing refrigerating fluid at a flow rate that is no longer proportional to the actual heat load.

This situation can produce the unwanted problem of liquid refrigerating fluid returning to the compressor, possibly damaging it.

A first object of the present invention is therefore a method for the control of the flow rate of refrigerating fluid in ice cream making machines comprising a vapour-compression refrigerating circuit provided with a compressor, a condenser, an evaporator and a main valve for injecting refrigerating fluid into the said evaporator, the method comprising the following steps:
- measuring the temperature-pressure values of the fluid at the outlet of the evaporator;
- tapping off, on the basis of the measurement taken in the first step, a flow of hot gas at the outlet of the compressor; and
- sending this tapped-off flow of gas to a point downstream of the main refrigerating fluid injection valve.

A second object of the present invention is an apparatus for carrying out this method, comprising at least one tapping-off line that takes a flow of gas from the outlet of this compressor and sends it to a zone of this circuit situated between the main valve and the evaporator; means are also provided on the said line to control and monitor this tapped-off flow of gas.

Advantageously, therefore, by means of the control method and apparatus according to the present invention use is made of a tapped-off flow of gas which, when injected downstream of the thermostatic valve, is at a relatively high temperature and has an additional heat load, which on entering the evaporator causes a greater opening of this thermostatic expansion valve, which will therefore be characterized by an ideal power of control.

Moreover, the injection of supplementary hot gas increases the rate of flow of vapour into the evaporator, increases the pressure and temperature of evaporation and avoids the excessive hardening of the product on the walls, thus eliminating the cause of the undesired stoppages of the compressor.

Other objects and advantages of the present invention will be understood more clearly in the course of the following description, which is given by way of example, no limitation being applied, and refers to the single attached drawing, in which:

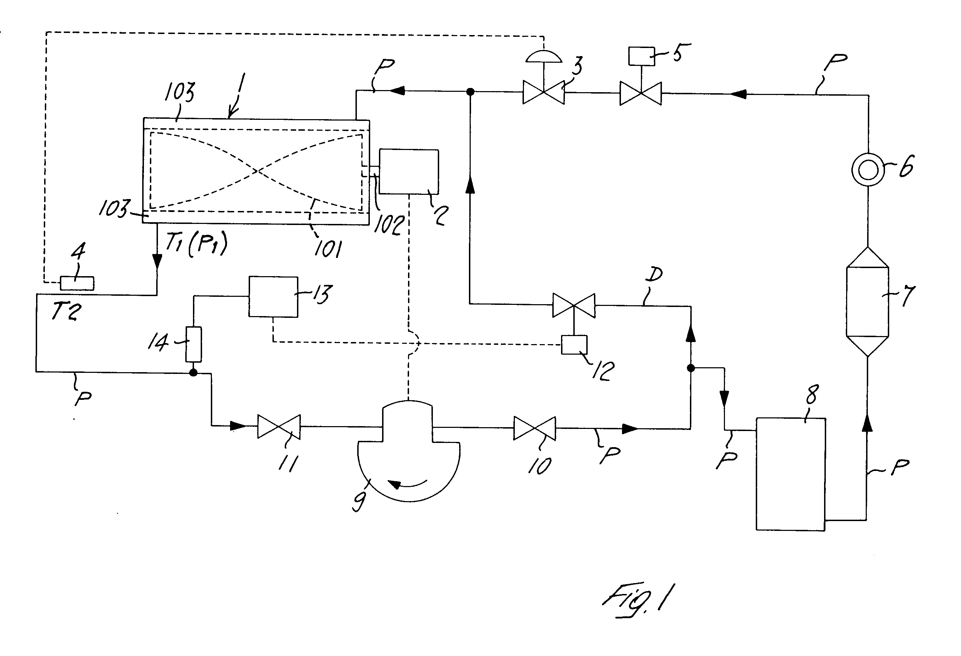

Fig. 1 is a block diagram of an ice cream making machine comprising a freezing cylinder, upstream of which hot gases are injected in accordance with the method and by the apparatus of the present invention.

Referring to this figure of the attached drawing, the number 1 denotes a freezing cylinder, or evaporator, into which is introduced a mixture of known components which by means of operations of aeration and stirring and cooling gives rise to the final product, namely the ice cream. This cylinder 1 contains a screw 101 for stirring the mixture, mounted on a rotary shaft 102 connected to a system 2 for monitoring the ice cream hardness. Illustrated upstream of the cylinder 1 is a thermostatic expansion valve 3 that controls the injection of refrigerating fluid into the evaporator 1 on the basis of a comparison of two temperatures measured in a main flow circuit P carrying the said refrigerating fluid: temperature T₁ or saturated evaporation temperature, sensed by the thermostatic valve 3 from the pressure P₁ of evaporation, and temperature T₂ at the outlet, sensed by a dedicated sensor 4 connected to the latter valve. Continuing along this main circuit P, which is effectively indicated by the outermost lines in the figure, upstream of the said thermostatic valve 3 the following are illustrated: a solenoid valve 5, a flow indicator 6, a filter 7, a condenser 8 and a compressor 9, the latter having two corks 10 and 11 for shutting off the gas on the delivery and intake sides. The said compressor 9 is connected, in a known manner, to the said ice cream hardness monitoring system 2. In this main refrigerating fluid flow circuit P, a tapping-off line D is inserted between the compressor 9 and the condenser 8 and takes a flow of gaseous fluid which it transfers to a point downstream of the thermostatic expansion valve 3. This line D is equipped with a pulse solenoid valve 12 whose operation is controlled by a control device 13 communicating with a pressure sensor 14 positioned downstream of the evaporator 1.

The machine illustrated in the diagram shown in the figure works as follows: the mixture which will be turned into the ice cream is placed in the evaporator 1, the inner walls 103 of which are visible, and is stirred by the screw 101; the circuit P is carrying a certain quantity of refrigerating fluid which is compressed and heated (compressor 9), condensed and cooled (condenser 8), filtered (filter 7) and sent to the freezing cylinder 1 in appropriate quantities controlled by the expansion valve 3. Inside this cylinder the stirring screw 101 is active until the mixture has reached the desired final hardness and temperature: basically, the ice cream hardness monitoring system 2 senses the load on the shaft 102 as it turns the said screw 101 and, when the said load reaches a predetermined value, stops the compressor 9. The problem, as mentioned earlier, is that because of the fraction of frozen water that forms on the inner walls 103 of the cylinder 1, the monitoring system 2 senses a load which in reality does not correspond to the actual hardness of the ice cream. The behaviour of the thermostatic valve 3 is also very irregular because, when the compressor is stopped, the temperatures T₁ (relative to the pressure P₁ in the evaporator 1) and T₂ at the outlet of the evaporator 1, exhibit large variations.

The line D for tapping off refrigerating fluid is therefore used to take the correct flow rate of gas leaving the compressor 9, while it is at a relatively high temperature, and conveys it through the solenoid valve 12 to a point downstream of the thermostatic valve 3: in this way the said valve 3 will sense a higher temperature T₂ and consequently send a greater quantity of fluid to the evaporator 1, increasing the heat load in the latter and eliminating unwanted stoppages of the compressor. The flow of gas tapped off along the line D is monitored by the sensor 14 and controlled by the device 13 from the temperature-pressure values on the intake side of the compressor 9. Once the correct temperature-pressure values are determined for the intake, a calculation algorithm is used to regulate the degree of opening of the solenoid injection valve 12, which will therefore send a precise flow of hot gases to a point downstream of the thermostatic valve 3.

Besides the advantageous results described above, it is also possible with the present method to modify the volume increase of the ice cream produced by the evaporator 1 by appropriately varying the evaporation of the refrigerating fluid with the flow rate of hot gases: this allows the manufacturer to produce a more customized final product to appeal to the eye and taste of the customer. With regard to this point the present method provides, among the numerous possible variants, an algorithm for controlling the volume of the ice cream, by relating the increase in hardness in a given period of time to the variation of the injection of hot gas into the evaporator.

## Claims

1. Method for the control of the flow rate of refrigerating fluid in ice cream making machines comprising a vapour-compression refrigerating circuit (P) provided as a minimum with a compressor (9), a condenser (8), an evaporator (1) and a main valve (3) for injecting refrigerating fluid into the said evaporator (1), the method being **characterized by** the following steps:
- measuring the temperature-pressure values of the fluid at the outlet of the evaporator (1);
- tapping off, on the basis of the measurement taken in the first step, a flow of hot gas at the outlet of the compressor (9); and
- sending the said tapped-off flow of gas to a point downstream of the main refrigerating fluid injection valve (3).

2. Method according to Claim 1, **characterized in that** it comprises an additional step of controlling the increase in volume of the ice cream produced by appropriately varying the evaporation of the refrigerating fluid with respect to the said tapped-off flow of hot gases.

3. Apparatus for carrying out the method according to Claim 1, for the control of the flow rate of refrigerating fluid in ice cream making machines comprising a vapour-compression refrigerating circuit (P) provided at least with a compressor (9), a condenser (8), an evaporator (1) and a main valve (3) for injecting refrigerating fluid into the said evaporator (1) **characterized in that** it comprises at least one tapping-off line (D) that takes a flow of gas from the outlet of the said compressor (9) and sends it to a zone of the said circuit (P) situated between the main valve (3) and the evaporator (1), means (12, 13, 14) being provided on the said line (D) to control and monitor the said tapped-off flow of gas.

4. Apparatus according to Claim 3, **characterized in that** a valve (12) is provided on the said tapping-off line (D) to inject the said tapped-off flow at a point downstream of the said main valve (3) of the refrigerating circuit (P).

5. Apparatus according to Claim 3, **characterized in that** it comprises downstream of the evaporator (1) a sensor (14) for monitoring the pressure of the expanded gas leaving the said evaporator (1).

6. Apparatus according to Claims 4 and 5, **characterized in that** it comprises a control device (13) connected to the said pressure sensor (14) and acting on the said injection valve (12).

7. Method according to Claims 1 and 2 for use in ice cream making machines comprising a freezing cylinder (103); an evaporator (1) in heat exchange relation with said freezing cylinder (103); a stirrer (101) for stirring the ice cream mixture inside said freezing cylinder (103) and a motor (2) for driving said stirrer (101), **characterized by** the fact that for preventing overloading of the motor (2) that drives the stirrer (101) for stirring the ice-cream mixture inside the feezing cylinder (103) of the apparatus according to Claims 3 to 6, there are provided a control device (13) connected to the sensor (14), the said devices acting together on the solenoid valve (12) in such a way as to prevent an excessive decrease in the temperature-pressure values in the evaporator (1).

8. Method according to any one of the previous Claims 1 to 3 and 7, **characterized in that** it is possible to determine an evaporation temperature by means of a sensor (4) at the outlet of the evaporator (1), and to correct the said temperature by injecting hot gas.
